(19) **Europäisches Patentamt / European Patent Office / Office européen des brevets**

(11) **EP 1 366 931 B1**

(12) **EUROPÄISCHE PATENTSCHRIFT**

(45) Veröffentlichungstag und Bekanntmachung des Hinweises auf die Patenterteilung:
**02.12.2009  Patentblatt 2009/49**

(51) Int Cl.:
**B60C 23/04** (2006.01)

(21) Anmeldenummer: **03004411.9**

(22) Anmeldetag: **27.02.2003**

(54) **Transponder zum Einbau in oder auf die Oberfläche von Gegenständen**

Transponder to be mounted in or on the surface of objects

Transpondeur destiné à être monté dans ou sur la surface d'objets

(84) Benannte Vertragsstaaten:
**DE FR GB IT**

(30) Priorität: **29.05.2002  DE 10223800**

(43) Veröffentlichungstag der Anmeldung:
**03.12.2003  Patentblatt 2003/49**

(73) Patentinhaber: **Continental Aktiengesellschaft
30165 Hannover (DE)**

(72) Erfinder:
• **Strache, Wolfgang, Dr.
30165 Hannover (DE)**
• **Behrends, Holger
30175 Hannover (DE)**

• **Recker, Carla, Dr.
30167 Hannover (DE)**
• **Baumgarten, Rainer
29649 Wietzendorf (DE)**
• **Wulf, Andreas
31553 Auhagen (DE)**
• **Jenke, Roland
29693 Hademsdorf (DE)**
• **Fidan, Sadettin
30827 Garbsen (DE)**
• **Campsheide, Olaf
31582 Nienburg (DE)**

(56) Entgegenhaltungen:
**WO-A-02/13309**

**Beschreibung**

Die Erfindung betrifft Transponder zum Einbau in oder auf die Oberfläche von Gegenständen, die im Wesentlichen aus einem Kautschukprodukt bestehen, insbesondere Transponder zum Einbau in einen Reifen, wobei der Transponder eine Dipolantenne aufweist und sich die Antennenlänge $L_{Luft}$, bei der ausschließlich Luft als Übertragunsgsmedium vorliegt, aus der Gleichung $L_{Luft} = 0,5 \times c/f$ berechnet, in der c die Lichtgeschwindigkeit und f die Übertragungsfrequenz sind.

Transponder werden im Reifen für verschiedene Aufgaben eingesetzt. Hierzu zählt insbesondere eine Reifenidentifikation mit der ein Automobilhersteller u. a. schnell sowie automatisiert feststellen kann, aus welchem Reifenwerk ein bestimmter Reifen geliefert wurde. Andere Aufgaben können eine Luftdrucküberwachung, eine Temperaturmessung, die Messung von mechanischen Spannungszuständen im Reifen oder eine Messung der zurückgelegten Laufleistung des Reifens umfassen. Moderne Transponder bestehen aus einem Elektronikbauteil bzw. -Chip, in dem Sensorelemente angeordnet sein können sowie aus einer an dieses Elektronikbauteil angeschlossenen Antenne.

Für eine optimale Übertragungsreichweite zwischen einem Transponder mit einer Dipolantenne und der außerhalb des Reifens angeordneten Sende- und Empfangseinrichtung ist es notwendig, dass die Antennen eine bestimmte Länge besitzen. Die optimale Antennenlänge, bei der die Übertragung ausschließlich über das Medium Luft erfolgt, berechnet sich in guter Näherung über die folgenden Gleichungen.

$$c = f \times \lambda \qquad\qquad (1)$$

Das Symbol c steht für die Lichtgeschwindigkeit, die näherungsweise $3 \times 10^8$ m/s beträgt. Mit f wird die Übertragungsfrequenz angegeben, die beispielsweise 915 MHz beträgt.

Über die Gleichung (1) würde sich für die Wellenlänge $\lambda$ ein Wert von 0,328 m berechnen. Die optimale Antennenlänge ist nach dem allgemein bekannten Stand der Technik in guter Näherung die Hälfte dieses Wertes:

$$L_{Luft} = 0,5 \times \lambda \qquad\qquad (2)$$

Demnach beträgt bei einer Übertragungsfrequenz von 915 MHz in Luft die optimale Antennenlänge in etwa 16,4 cm. Durch sogenannte Randeffekte kann die optimale Dipollänge leicht von der Halbwellenlänge abweichen. Bei der Anordnung eines Transponders mit einer solchen Antennenlänge in einem Reifen tritt der Nachteil ein, dass das umgebende Reifenmaterial die Übertragungsreichweite des Transponders erheblich reduziert. Die Reduzierung der Übertragungsreichweite des Transponders ist sowohl auf das umgebende Gummimaterial als auch auf die verschiedenen Festigkeitsträger zurückzuführen, die in unterschiedlichen Schichten des Reifens angeordnet sind.

Die JP11-42915 und WO 02/07993 A2 offenbaren Transponder mit einer Dipolantenne, die in einem Fahrzeugreifen angeordnet sind. In der WO 02/13309 A ist ebenfalls ein Transponder mit einer Dipolantenne offenbart.

Der Erfindung liegt die Aufgabe zugrunde, einen Transponder mit einer flexiblen Dipolantenne zum Einbau in ein Kautschukprodukt zu schaffen, der eine möglichst hohe Übertragungsreichweite zu der außerhalb des Kautschukproduktes angeordneten Sende- und Empfangseinrichtung besitzt.

Gelöst wird die Aufgabe gemäß den kennzeichnenden Merkmalen von Anspruch 1 dadurch, dass der Transponder eine Antennenlänge $L_{kp}$ im Längenbereich zwischen $0,45 \times L_{Luft}$ und $0,90 \times L_{Luft}$, vorzugsweise bei etwa 0,61 bis $0,71 \times L_{Luft}$, aufweist, und die Dipolantenne aus mehreren elastisch oder/und plastisch verformbaren Filamenten besteht.

Ein Vorteil der Erfindung ist insbesondere darin zu sehen, dass durch die verkürzte Antennenlänge die Übertragungsreichweite des in das Kautschukprodukt eingebauten Transponders erheblich verbessert bzw. gesteigert wird. Umfangreiche Messungen haben ergeben, dass die optimale Übertragungsrate überraschenderweise bei einem Transponder in einem Kautschukprodukt bei einer Antennenlänge zwischen $0,61 \times L_{Luft}$ und $0,71 \times L_{Luft}$, vorzugsweise bei etwa $0,66 \times L_{Luft}$, erreicht wird. Bei einer solchen Atennenlänge kann die Übertragungsrate erheblich gegenüber einem im Kautschukprodukt angeordneten Transponder mit ungekürzter Antennenlänge gesteigert werden. Mit abnehmender bzw. zunehmender Antennenlänge nimmt die Übertragungsreichweite kontinuierlich ab. Dennoch zeigen die Untersuchungen, dass im gesamten Längenbereich von $0,45 \times L_{Luft}$ bis $0,90 \times L_{Luft}$ eine gegenüber einem Referenzwert bei Luft höhere Übertragungsreichweite vorliegt.

In einer vorteilhaften Weiterbildung der Erfindung ist vorgesehen, dass die Übertragunsfrequenz f im Bereich zwischen 868 - 928 MHz liegt. Dieser Frequenzbereich ist auf die verkürzte Antennenlänge besonders gut abgestimmt.

In einer weiteren vorteilhaften Weiterbildung der Erfindung ist vorgesehen, dass die Dipolantenne aus Stahl oder einer Stahllegierung besteht. Der Transponder ist im Reifen hohen mechanischen Wechselbeanspruchungen ausgesetzt, die beispielsweise zu einem Brechen von Kupferantennen führen können. Stahl bietet als Antennenmaterial den Vorteil, dass es eine hohe Biegewechselfestigkeit besitzt, sich als Material des Stahlgürtels im Reifen bewährt hat und den Belastungen im Reifen besser standhalten kann.

In einer weiteren vorteilhaften Weiterbildung der Erfindung ist vorgesehen, dass die Dipolantenne aus einer Beryllium-Kupfer-Legierung besteht. Dieses Material weist ebenfalls eine hohe Biegewechselfestigkeit bei gleichbleibender Übertragungsreichweite auf.

In einer weiteren vorteilhaften Weiterbildung der Erfindung ist vorgesehen, dass die Oberfläche der Dipolantenne mit Messing beschichtet ist. Zwischen Transponder und umgebendem Gummimaterial sollte eine gute Haftung vorliegen. Die Messingbeschichtung sorgt für eine optimale Haftung zwischen der Dipolantenne und dem umgebenden Gummimaterial des Reifens.

In einer weiteren vorteilhaften Weiterbildung befindet sich zwischen Stahl und Messingschicht eine Silberschicht, die vorzugsweise zwischen 10 und 100 $\mu$m dick ist.

Diese Schicht verringert den effektiven Widerstand der Antenne (Skineffekt) und führt somit zur Verbesserung der Güte, woraus seinerseits eine Reichweitenerhöhung resultiert.

In einer weiteren vorteilhaften Weiterbildung der Erfindung ist vorgesehen, dass die Dipolantenne über Schweißverbindungen mit dem Transponder-Chip verbunden sind. Bei handelsüblichen Transpondern wird die Dipolantenne über eine Lötverbindung mit dem Transponder-Chip verbunden. Im Reifen kann diese Verbindungsstelle aufgrund von mechanischen Beanspruchungen auseinanderbrechen. Die Schweißverbindung hält hingegen wesentlich höheren Belastungen stand.

In einer weiteren vorteilhaften Weiterbildung der Erfindung ist vorgesehen, dass der Transponder-Chip und seine Verbindung zur Dipolantenne in einem Gehäuse oder einem schützenden Material angeordnet sind. Das Gehäuse umschließt die Verbindungsstellen zum Transponder-Chip und schützt dadurch diese Schwachstellen vor hohen mechanischen Belastungen.

In einer weiteren vorteilhaften Weiterbildung der Erfindung ist vorgesehen, dass die Filamente über eine elektrisch leitfähige Gummimischung miteinander in Verbindung stehen. Dadurch kann bei einem Filamentbruch die Bruchstelle über die leitfähige Gummimischung überbrückt werden.

In einer weiteren vorteilhaften Weiterbildung der Erfindung ist vorgesehen, dass der gesamte Transponder in ein elektrisch nichtleitfähiges Material eingebettet ist. Das nichtleitfähige Material, z.B. eine rußfreie Gummimischung, wirkt als Isolator zu dem umgebenden Gummimaterial. Die empirischen Untersuchungen zeigen, dass durch eine solche Einbettung die Übertragungsreichweite ebenfalls um etwa 50 % gesteigert werden kann. Die Reichweitenerhöhung beruht überwiegend auf einer Verbesserung der elektromagnetischen Eigenschaften der Dipolantenne.

In einer weiteren vorteilhaften Weiterbildung der Erfindung ist vorgesehen, dass das nichtleitfähige Material eine nichtleitfähige Gummimischung oder / und ein thermoplastisches Elastomer ist. Als nichtleitfähige Gummimischung kommt beispielsweise eine Silikamischung oder eine einfach herzustellende rußfreie Gummimischung in Frage. Das thermoplastische Elastomer bietet hingegen den Vorteil der einfachen Verarbeitung. Der Transponder lässt sich auf eine einfache Art und Weise in ein solches Material einbetten.

In einer weiteren vorteilhaften Weiterbildung der Erfindung ist vorgesehen, dass die Oberfläche der Dipolantenne mit einem nichtleitfähigen Lack beschichtet ist. Auf diese Weise wird die Isolation gegenüber dem umgebenden Gummimaterial noch einmal gesteigert und dadurch die Übertragungsreichweite verbessert.

In einer weiteren vorteilhaften Weiterbildung der Erfindung ist vorgesehen, dass der Transponder im Reifen im Bereich des Reifenwulstes angeordnet wird. Die Anordnung im Reifenwulst bietet den Vorteil, dass in diesem Reifenbereich nur relativ geringe Beanspruchungen auftreten, die zu einer Beschädigung des Transponders führen könnten.

In einer weiteren vorteilhaften Weiterbildung der Erfindung ist vorgesehen, dass der Transponder bei der Reifenkonfektion an der Appexiermaschine im oder am Apex angeordnet wird. Die Apexiermaschine ist ein von der Reifenaufbaumaschine unabhängiger Verfahrensschritt. Dadurch wird die Taktzeit an der Reifenaufbaumaschine nicht dadurch reduziert, dass an dieser Maschine noch ein zusätzliches Bauteil aufgebracht werden muss.

Anhand mehrerer Ausführungsbeispiele soll die Erfindung näher erläutert werden. Es zeigen:

Fig. 1: Transponder mit einer Dipolantenne,
Fig. 2: Dipolantenne aus Filamenten,
Fig. 3: Transponder in einem nichtleitfähigen Material angeordnet und
Fig. 4: Transponder im Reifenwulst angeordnet.

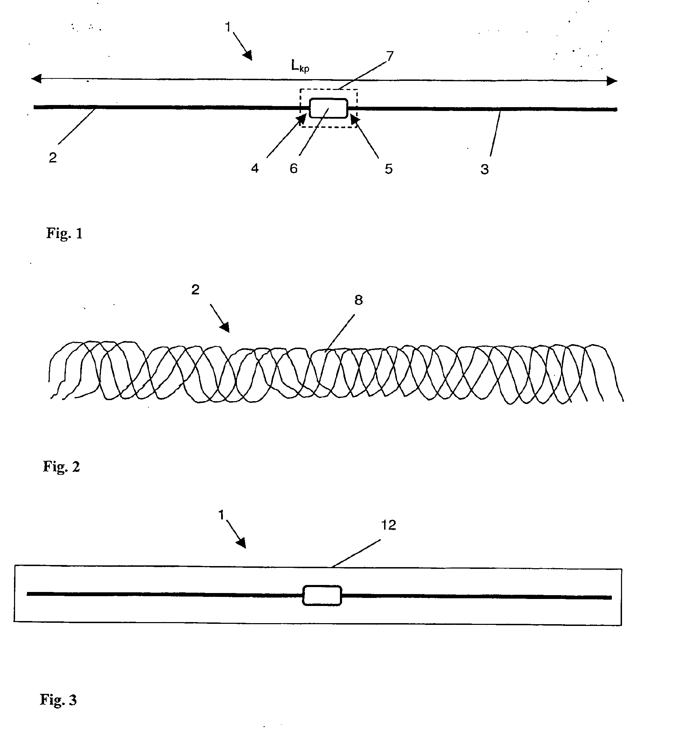

Figur 1 zeigt einen Transponder 1 mit einer Dipolantenne, die sich aus zwei gegenüberliegenden Antennen 2 und 3 zusammensetzt. Die beiden Antennen 2 und 3 der Dipolantenne sind vorzugsweise über eine hochfeste Schweißverbindung in den Bereichen 4 und 5 mit den in der Figur nicht dargestellten Kontakten des Transponder-Chips verbunden. Die Länge $L_{kp}$ kennzeichnet die optimale Länge der Dipolantenne, wie sie im Reifen vorliegen sollte. Im Ausführungsbeispiel wird eine Übertragungsfrequenz f von 915 MHz und einer Lichtgeschwindigkeit c von etwa 300 x

$10^6$ m/s zugrunde gelegt. Aus diesen Werten berechnet sich nach dem Stand der Technik eine optimale Antennenlänge von ca. 16,4 cm, wenn ausschließlich Umgebungsluft als Übertragungsmedium vorliegt. Umfangreiche Untersuchungen haben ergeben, dass die Antennenlänge $L_{kp}$ des Transponders im Reifen erheblich verkürzt werden muss, um die Übertragungsreichweite zu erhöhen bzw. wieder an den Ausgangswert heranzuführen, der erreicht wird, wenn ausschließlich Umgebungsluft als Übertragungsmedium vorliegt. Die Untersuchungen zeigen, dass das Maximum der Übertragungsreichweite bei einer Antennenlänge von etwa 10,0 bis 11,5 cm erreicht wird. Bei einem kleineren oder größeren Wert nimmt die Übertragungsreichweite stetig ab.

Bei einer Integration des Transponders in den Reifen während der Reifenkonfektion ist zu berücksichtigen, dass das Reifenmaterial plastischen Verformungen ausgesetzt wird, die gegebenenfalls auf die Antennenlänge des Transponders übertragen werden. Dieser Umstand ist insbesondere bei dehnbaren Antennenkonstruktionen zu beachten. In diesem Fall muss die Antennenlänge des Transponders entsprechend kürzer dimensioniert werden, so dass nach der Reifenkonfektion die Antennenlänge den Wert $L_{kp}$ aufweist. Beim Ausführungsbeispiel müsste die Antennenlänge demnach nach der Reifenkonfektion in etwa 10,8 cm lang sein. Das gestrichelte Rechteck zeigt die mögliche Anordnung eines Gehäuses 7, welches die Verbindungsbereiche 4 und 5 zwischen den Antennen 2 und 3 sowie dem Transponder-Chip 6 vor mechanischen Belastungen schützt. Es ist ebenfalls denkbar, ein solches Gehäuse dadurch zu ersetzen, dass der gekapselte Transponder-Chip 6 und die Verbindungsbereiche 4 und 5 in ein Epoxidharz eingebettet werden. Wenn die Kontaktstellen der Antennen von einem Gehäuse geschützt sind, könnte aus Kostengründen auf die Chipkapselung (Housing) verzichtet werden, so dass die Antennen direkt mit dem Silizium kontaktiert werden.

Figur 2 zeigt ein weiteres Ausführungsbeispiel der Antenne 2 oder 3 der Dipolantenne. Bei diesem Ausführungsbeispiel besteht die Antenne aus einzelnen Filamenten 8, die miteinander verflochten und relativ zueinander beweglich verschiebbar angeordnet sind. Eine weitere Ausführungsvariante besteht darin, dass die in der Figur 2 dargestellte Antenne mit einer in der Figur nicht dargestellten elektrisch hochleitfähigen Gummimischung durchsetzt ist. Bei einer Durchtrennung eines Filaments kann dadurch die in der Regel sehr kleine Rissstelle über das umgebende leitfähige Gummimaterial elektrisch überbrückt werden. Als hochleitfähige Gummimischung ist beispielsweise eine Mischung mit einem hohen Rußanteil möglich.

Figur 3 zeigt ein Ausführungsbeispiel, bei dem der gesamte Transponder 1 in ein nichtleitfähiges Material eingebettet ist. Eine solche Einbettung kann dadurch erfolgen, dass der Transponder 1 von beiden Seiten mit einem nichtleitfähigen Materialstreifen 12, beispielsweise aus einer Silicagummimischung, zugedeckt wird. Statt dessen oder als zusätzliche Maßnahme ist es möglich, den Transponder 1 in einen Streifen aus einem thermoplastischen Elastomer einzuwickeln. Es ist ebenfalls denkbar, die Antennen vorher zusätzlich mit einem nichtleitfähigen Lack zu lackieren.

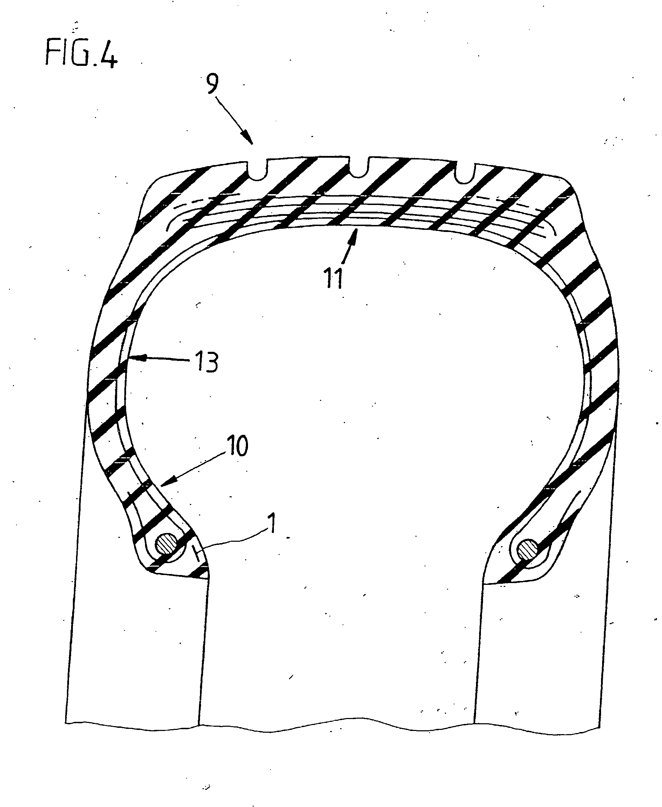

Figur 4 zeigt einen Radialquerschnitt eines Reifens 9. Der Transponder 1 ist im Reifenwulst auf der Reifeninnenseite 10 angeordnet. Der Transponder 1 könnte ebenfalls vorzugsweise auf der Reifeninnenseite im Zenitbereich 11 oder im Seitenwandbereich 13 des Reifens 9 angeordnet werden.

**Bezugszeichenliste**

(ist Teil der Beschreibung)

| | |
|---|---|
| 1 | Transponder |
| 2 | linke Antenne der Dipolantenne |
| 3 | rechte Antenne der Dipolantenne |
| 4 | linker Verbindungsbereich zwischen Antenne und Transponder-Chip |
| 5 | rechter Verbindungsbereich zwischen Antenne und Transponder-Chip |
| 6 | Transponder-Chip |
| 7 | Gehäuse |
| 8 | Filament |
| 9 | Reifen |
| 10 | Reifeninnenseite |
| 11 | Zenitbereich des Reifens |
| 12 | Nichtleitfähiger Materialstreifen |
| 13 | Seitenwandbereich des Reifens |

| | |
|---|---|
| c | Lichtgeschwindigkeit |
| f | Übertragungsfrequenz |
| λ | Wellenlänge |
| $L_{Luft}$ | Antennenlänge bei Luft als ausschließliches Übertragungsmedium |

$L_{kp}$      Antennenlänge im Kautschukprodukt

**Patentansprüche**

**1.** Transponder zum Einbau in oder auf die Oberfläche von Gegenständen, die im Wesentlichen aus einem Kautschukprodukt bestehen, insbesondere Transponder zum Einbau in einen Reifen, wobei der Transponder eine Dipolantenne aufweist, deren Antennenlänge $L_{Luft}$ für den Fall, dass ausschließlich Luft als Übertragungsmedium vorliegt, sich aus der Gleichung $L_{Luft} = 0,5 \times c/f$ berechnet, in der c die Lichtgeschwindigkeit und f die Übertragungsfrequenz sind, **dadurch gekennzeichnet, dass**

der Transponder (1) eine Antennenlänge $L_{kp}$ im Längenbereich zwischen $0,45 \times L_{Luft}$ und $0,90 \times L_{Luft}$, vorzugsweise bei etwa 0,61 bis $0,71 \times L_{Luft}$, aufweist, wobei die Dipolantenne aus mehreren elastisch oder / und plastisch verformbaren Filamenten (8) besteht.

**2.** Reifen mit einem Transponder nach Anspruch 1, der auf der Oberfläche oder im Reifen angeordnet ist.

**3.** Transponder oder Reifen nach Anspruch 1 oder 2,
**dadurch gekennzeichnet, dass**
die Übertragunsfrequenz f im Bereich zwischen 868 - 928 MHz liegt.

**4.** Transponder oder Reifen nach einem der Ansprüche 1 bis 3,
**dadurch gekennzeichnet, dass**
die Dipolantenne aus Stahl oder einer Stahllegierung besteht.

**5.** Transponder oder Reifen nach einem der Ansprüche 1 bis 4,
**dadurch gekennzeichnet, dass**
die Dipolantenne aus einer Beryllium-Kupfer-Legierung besteht.

**6.** Transponder oder Reifen nach einem der Ansprüche 1 bis 5,
**dadurch gekennzeichnet, dass**
die Oberfläche der Dipolantenne mit Messing beschichtet ist.

**7.** Transponder oder Reifen nach einem der Ansprüche 1 bis 6,
**dadurch gekennzeichnet, dass**
zwischen Stahl und Messingschicht eine Silberschicht angeordnet ist.

**8.** Transponder oder Reifen nach einem der Ansprüche 1 bis 7,
**dadurch gekennzeichnet, dass**
die Dipolantenne über Schweißverbindungen mit dem Transponder-Chip (6) verbunden sind.

**9.** Transponder oder Reifen nach einem der Ansprüche 1 bis 8,
**dadurch gekennzeichnet, dass**
der Transponder-Chip (6) und seine Verbindung zur Dipolantenne in einem Gehäuse (7) oder einem schützenden Material angeordnet sind.

**10.** Transponder oder Reifen nach einem der Ansprüche 1 bis 9,
**dadurch gekennzeichnet, dass**
die Filamente (8) über eine elektrisch leitfähige Gummimischung oder Elastomermischung miteinander in Verbindung stehen.

**11.** Transponder oder Reifen nach einem der Ansprüche 1 bis 10,
**dadurch gekennzeichnet, dass**
der gesamte Transponder (1) in ein elektrisch nichtleitfähiges Material eingebettet (12) ist.

**12.** Transponder oder Reifen nach einem der Ansprüche 1 bis 11,
**dadurch gekennzeichnet, dass**
das nichtleitfähige Material eine nichtleitfähige Gummimischung oder / und ein thermoplastisches Elastomer ist.

**13.** Transponder oder Reifen nach einem der Ansprüche 1 bis 12,
**dadurch gekennzeichnet, dass**
die Oberfläche der Dipolantenne mit einem nichtleitfähigen Lack beschichtet ist.

**14.** Reifen nach einem der Ansprüche 1 bis 13,
**dadurch gekennzeichnet, dass**
der Transponder (1) im Reifen (9) im Bereich des Reifenwulstes angeordnet wird.

**15.** Reifen nach einem der Ansprüche 1 bis 14,
**dadurch gekennzeichnet, dass**
der Transponder (1) bei der Reifenkonfektion an der Appexiermaschine im oder am Apex angeordnet wird.

**Claims**

**1.** Transponder for fitting in or on the surface of articles which substantially comprise a rubber product, in particular transponders for fitting in a tyre, the transponder having a dipole antenna, the antenna length $L_{air}$ of which, in the case in which air is exclusively present as the transmission medium, is calculated from the equation $L_{air} = 0.5 \times c/f$, in which c is the speed of light and f is the transmission frequency, **characterized in that** the transponder (1) has an antenna length $L_{kp}$ in the length range between $0.45 \times L_{air}$ and $0.90 \times L_{air}$, preferably around 0.61 to $0.71 \times L_{air}$, the dipole antenna comprising a number of elastically or/and plastically deformable filaments (8).

**2.** Tyre with a transponder according to Claim 1, which is arranged on the surface or in the tyre.

**3.** Transponder or tyre according to Claim 1 or 2, **characterized in that** the transmission frequency f lies in the range between 868 and 928 MHz.

**4.** Transponder or tyre according to one of Claims 1 to 3, **characterized in that** the dipole antenna consists of steel or a steel alloy.

**5.** Transponder or tyre according to one of Claims 1 to 4, **characterized in that** the dipole antenna consists of a beryllium-copper alloy.

**6.** Transponder or tyre according to one of Claims 1 to 5, **characterized in that** the surface of the dipole antenna is coated with brass.

**7.** Transponder or tyre according to one of Claims 1 to 6, **characterized in that** a silver layer is arranged between the steel and the brass layer.

**8.** Transponder or tyre according to one of Claims 1 to 7, **characterized in that** the dipole antenna is connected to the transponder chip (6) by means of welded connections.

**9.** Transponder or tyre according to one of Claims 1 to 8, **characterized in that** the transponder chip (6) and its connection with respect to the dipole antenna are arranged in a housing (7) or a protective material.

**10.** Transponder or tyre according to one of Claims 1 to 9, **characterized in that** the filaments (8) are in connection with one another by means of an electrically conductive rubber blend or elastomer blend.

**11.** Transponder or tyre according to one of Claims 1 to 10, **characterized in that** the entire transponder (1) is embedded (12) in an electrically nonconductive material.

**12.** Transponder or tyre according to one of Claims 1 to 11, **characterized in that** the nonconductive material is a nonconductive rubber blend or/and a thermoplastic elastomer.

**13.** Transponder or tyre according to one of Claims 1 to 12, **characterized in that** the surface of the dipole antenna is coated with a nonconductive coating.

**14.** Tyre according to one of Claims 1 to 13,

**characterized in that** the transponder (1) is arranged in the tyre (9) in the region of the tyre bead.

15. Tyre according to one of Claims 1 to 14,
**characterized in that** the transponder (1) is arranged in or on the apex during the manufacture of the tyre on the apexing machine.

**Revendications**

1. Transpondeur destiné à être incorporé dans ou sur la surface d'objets constitués essentiellement d'un produit de caoutchouc, en particulier transpondeur destiné à être monté dans un bandage de roue, le transpondeur présentant une antenne dipolaire dont la longueur d'antenne $L_{Luft}$ est calculée à partir de l'équation $L_{Luft} = 0,5 \times c/f$ au cas où seul l'air est disponible comme milieu de transfert, c représentant la vitesse de la lumière et f la fréquence de transfert, **caractérisé en ce que**
le transpondeur (1) présente une longueur d'antenne $L_{kp}$ de l'ordre de $0,45 \times L_{Luft}$ à $0,90 \times L_{Luft}$, de préférence d'environ $0,61$ à $0,71 \times L_{Luft}$, l'antenne dipolaire étant constituée de plusieurs filaments (8) élastiquement et/ou plastiquement déformables.

2. Bandage de roue doté d'un transpondeur selon la revendication 1, disposé sur la surface ou dans le bandage de roue.

3. Transpondeur ou bandage de roue selon les revendications 1 ou 2, **caractérisés en ce que** la fréquence de transmission f est comprise dans la plage de 868 à 928 MHz.

4. Transpondeur ou bandage de roue selon l'une des revendications 1 à 3, **caractérisés en ce que** l'antenne dipolaire est constituée d'acier ou d'un alliage d'acier.

5. Transpondeur ou bandage de roue selon l'une des revendications 1 à 4, **caractérisés en ce que** l'antenne dipolaire est constituée d'un alliage de béryllium et de cuivre.

6. Transpondeur ou bandage de roue selon l'une des revendications 1 à 5, **caractérisés en ce que** la surface de l'antenne dipolaire est revêtue de laiton.

7. Transpondeur ou bandage de roue selon l'une des revendications 1 à 6, **caractérisés en ce qu'**une couche d'argent est disposée entre l'acier et la couche de laiton.

8. Transpondeur ou bandage de roue selon l'une des revendications 1 à 7, **caractérisés en ce que** l'antenne dipolaire est reliée à la puce de transpondeur (6) par des liaisons soudées.

9. Transpondeur ou bandage de roue selon l'une des revendications 1 à 8, **caractérisés en ce que** la puce de transpondeur (6) et sa liaison à l'antenne dipolaire sont disposées dans un boîtier (7) ou dans un matériau de protection.

10. Transpondeur ou bandage de roue selon l'une des revendications 1 à 9, **caractérisés en ce que** les filaments (8) sont reliés les uns aux autres par un mélange de caoutchouc ou un mélange d'élastomère électriquement conducteur.

11. Transpondeur ou bandage de roue selon l'une des revendications 1 à 10, **caractérisés en ce que** la totalité du transpondeur (1) est incorporée dans un matériau (12) électriquement non conducteur.

12. Transpondeur ou bandage de roue selon l'une des revendications 1 à 11, **caractérisés en ce que** le matériau non conducteur est un mélange de caoutchouc non conducteur et/ou un élastomère thermoplastique.

13. Transpondeur ou bandage de roue selon l'une des revendications 1 à 12, **caractérisés en ce que** la surface de l'antenne dipolaire est revêtue d'un vernis non conducteur.

14. Bandage de roue selon l'une des revendications 1 à 13, **caractérisé en ce que** le transpondeur (1) est disposé dans la zone occupée par le bourrelet du bandage de roue (9).

15. Bandage de roue selon l'une des revendications 1 à 14, **caractérisé en ce que** le transpondeur (1) est disposé sur la machine de formation du sommet ou sur le sommet lors de la confection du bandage de roue.

Fig. 1

Fig. 2

Fig. 3

FIG.4

9

11

13

10

1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11042915 A
- WO 0207993 A2
- WO 0213309 A